# EUROPEAN PATENT SPECIFICATION

(11) **EP 2 767 061 B1**
(45) Date of publication and mention of the grant of the patent: **16.09.2015**
(21) Application number: 12770502.8
(22) Date of filing: 12.10.2012
(51) Int. Cl.: H04L 29/06, G07C 9/00, H04B 5/00

(54) **DEVICE FOR ADAPTATION BETWEEN A CONTACTLESS READER AND A RADIOFREQUENCY DEVICE**
VORRICHTUNG ZUR ANPASSUNG ZWISCHEN EINER KONTAKTLOSEN LESEVORRICHTUNG UND EINER HOCHFREQUENZVORRICHTUNG
DISPOSITIF D'ADAPTATION ENTRE UN LECTEUR SANS CONTACT ET UN DISPOSITIF RADIOFRÉQUENCE

(30) Priority: 13.10.2011 EP 11306324
(43) Date of publication of application: 20.08.2014
(73) Proprietor: Gemalto SA, 92190 Meudon (FR)
(72) Inventor: THILL, Michel, F-92190 Meudon (FR); MULLER, Marc, F-92190 Meudon (FR); SPYROPOULOS, Evangelos, F-92190 Meudon (FR)
(74) Representative: Cour, Pierre
(86) International application number: PCT/EP2012/070339
(87) International publication number: WO 2013/053923

(56) References cited:
- EP-A2- 1 695 296
- US-A1- 2008 008 359
- US-A1- 2008 174 554

## Description

The invention relates to a device for adaptation between a contactless reader and a radiofrequency device.

Contactless access control devices are increasingly widespread, and simplify the control operation for the user. Thus, contactless type inspection is commonly used in public transport, using for example the standard ISO 1443 or a similar standard. Typically, this type of communication standard uses a reader that emits an electromagnetic field, which can power and communicate with the portable device.
The portable device is made up of a plastic or cardboard support that comprises a chip and an antenna. The antenna also behaves like a semi-transformer, which can retrieve enough energy to power the chip.

Besides, the chip comprises authentication information that enables the reader to check the authenticity of the device and also check if the device is indeed authorised. When the portable device is powered by the reader, communication is carried out between the reader and the portable device to check the information of the portable device and authorise or deny access to a port or gate with which the reader is associated. Such transactions are carried out in a few hundredths of a second and enable access control.

Transport tickets issued in this way can thus be dematerialised. Thus, the use of the mobile phone for carrying out such transactions is also known. In that case, the telephone comprises an antenna that can communicate with the reader and the access information is stored in a secure element similar to a chip of a portable device.

The use of highly secure personal authentication devices that operate seamlessly for the user is also known, particularly through patent EP1695296. These authentication devices take the form of an object worn by the user, such as for instance a bracelet, with which the user can be authenticated strongly, for instance by biometric means. User authentication remains valid as long as the object remains in contact with the user. These personal authentication devices are used by simple contact by the user with the contact zone of an appropriate reader. Through contact, capacitive coupling communication makes it possible to exchange keys for encrypted radio communication. Encrypted radio communication makes it possible to carry out fairly complex transactions, while providing a very high level of security.

Personal authentication devices are not largely used at present and solutions need to be found to allow their use with existing infrastructure, with no need for large-scale investment to transform the current network. In particular, it is preferable to make a minor local modification with no impact on the existing infrastructure. That is why the solution that is the least intrusive in respect of the current base of control devices will be preferred. The present invention is defined by the subject matter of the independent claims. Preferred embodiments are defined by the dependent claims.

According to the invention, a translation device is added to a contactless reader in order to transform it, for a low cost, into a reader for personal authentication devices without modifying the overall infrastructure. Thus, the communication device translation comprises a first communication interface of the capacitive coupling type, a second communication interface of the radiofrequency type, a processing and memory unit and a third communication interface of the contactless type compliant with ISO 14443. The first interface makes it possible to carry out first communication to exchange confidential information with a user device. The second interface makes it possible to set up an encrypted radiofrequency type link with the user device using the confidential information. A processing and memory unit makes it possible to transfer, via the second interface, the authentication information contained in the user device and intended for a control device. The third communication interface uses an electromagnetic field supplied by a control device to communicate the authentication information that was received earlier from the user device.

That translation device makes it possible to retrieve all the authentication information from the user device before triggering the start of the session with the control device. Thus, the NFC transaction can take place independently, without being subject to any time constraint relating to simply translating the protocol for each message.

Preferably, the processing and memory unit can systematically erase the authentication information after it is transmitted via the third interface. The said device may be integrated into a control device. The first interface can establish communication using the human body as the conductor. The second interface may be a short-range radiofrequency type interface using wide band modulation.

In order to do away with any power supply problems, the device may comprise a power circuit that makes it possible to retrieve energy from the electromagnetic field in order to recharge a battery that is used to power the first to the third communication interfaces and the processing and memory unit.

In another aspect, the invention is a method for authentication between a user device using first communication by capacitive coupling to start encrypted radiofrequency communication and an access control device of the contactless type using a modulated electromagnetic field. A translation device is used, comprising a first communication interface of the capacitive coupling type, a second communication interface of the radiofrequency type, a third communication interface of the contactless type, compliant with ISO 14443, using the electromagnetic field supplied by the control device, and a processing and memory unit. The method comprises the following steps:
- establishment of first communication to exchange confidential information between the user device and the translation device;
- establishment of a link of the encrypted radiofrequency type between the user device and the translation device using the confidential information;
- transfer to the translation device via the second interface of authentication information contained in the user device and intended for the accen control device;
- at the end of the transfer of the authentication information to the translation device, establishment of contactless communication between the translation device and the control device and execution of a session using the authentication information received earlier from the user device.

Preferably, the processing and memory unit of the translation device can erase all the information after it is transferred to the control device. The translation device can retrieve part of the energy of the electromagnetic field supplied by the control device to power itself.

The invention will be better understood and other particularities and benefits will become clear in the description below, which refers to the attached drawings, where:
- figure 1 represents an example of implementation of the invention,
- figure 2 is a functional diagram of the invention,
- figure 3 illustrates the operating of communication through the human body,
- figure 4 illustrates the different communications implemented with the invention,
- figure 5 illustrates a functional alternative of the invention.

The invention is described here in relation with one access control device, but the person of the art will understand that any access control device in the wider sense is concerned. Control device means any device that has to authenticate a user. By extension, a payment device is assimilated here with a control device.

In order to achieve transformation for a low cost, which is also as non-intrusive as possible in respect of the existing infrastructure, a first idea is to interpose a protocol translator which can translate each message from one protocol to another. That would mean that each message exchanged is translated between the protocols NFC and UWB.

However, NFC protocols have been designed for very brief transactions relating to the use of devices that are self-powered with the field of the reader. This type of device must respond very fast while it is in the field of the reader in an almost immobile manner for the duration of the transaction while the device is moving. To that end, the response time expected by the reader is so short that the use of solutions of such types cannot be envisaged.

The invention proposes a translation device aimed at replacing the user device to carry out a transaction after receiving all the information for carrying out the transaction from the user device.

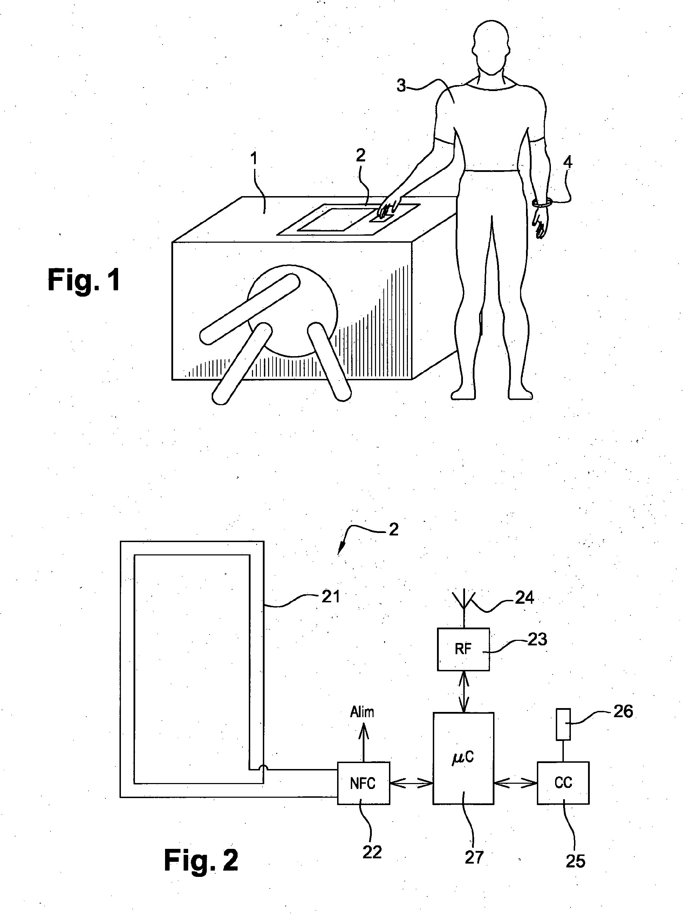

Figure 1 represents the implementation of the invention for controlling access to a transport network. A control device 1 is equipped with a translation device 2 to allow a user 3 to be authenticated using a personal authentication device 4. The control device 1 is of the contactless reader type in accordance with the standard IS014443 with an antenna in the form of a semi-transformer producing an electromagnetic field. This type of access control device 1 is increasingly widespread throughout the world and to make it compatible with the invention, a translation device 2 must be added, which requires as little modification of the device 1 as possible.

Thus, the translation device 2 is made so as to be a simple piece that is added to the control device 1. The translation device 2 is detailed functionally in figure 2. The control device comprises a first antenna 21 connected to a contactless interface 22. The antenna 21 and the interface 22 provide a contactless interface that is also known under the name of NFC (Near Field Communication) interface. This type of communication uses the short-range radiant electromagnetic field which also makes it possible to power a transponder that communicates with the reader. This type of interface is for example defined in the standard ISO14443. The antenna 21 forms a demi-transformer, so it is possible to retrieve a power supply voltage 'Alim' by rectification and filtering at the interface 22 to supply electricity to all the other elements of the translation device 2.

The translation device 2 also comprises a radiofrequency interface 23 coupled with an antenna 24 and a capacitive coupling communication interface 25 fitted with an electrode 26 designed to be in contact with the user 3 of the personal authentication device 4. The radiofrequency interface 23 is for example an interface using UWB (Ultra Wide Band) type modulation, such as that defined in the standard IEEE802.15.4. The interface 25 is an interface that uses the human body as a signal vector, also known under the abbreviation IBC (Intra Body Communication).

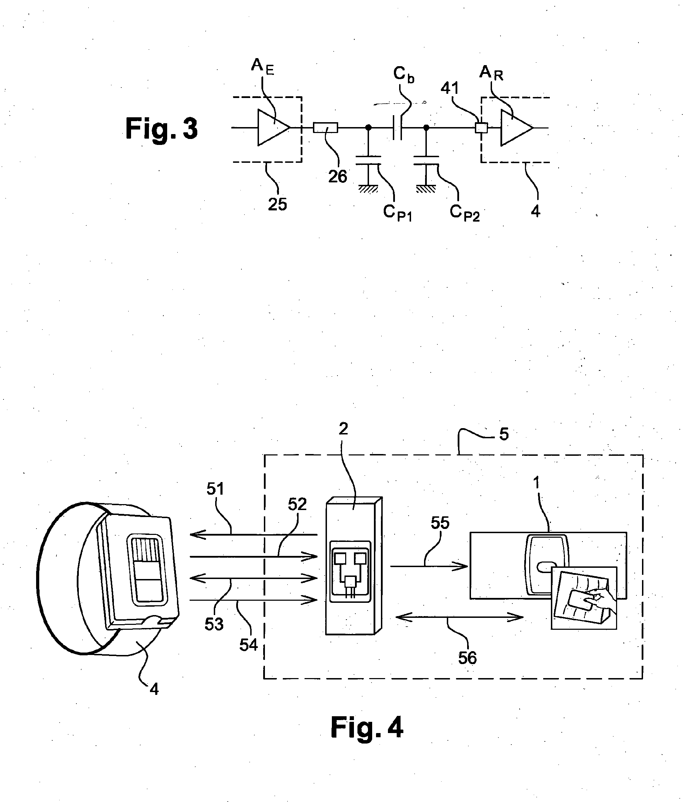

IBC communication is based on the principle that electric field modulation makes it possible to transport a signal on the human skin using a technique called capacitive coupling, where the human body behaves like a capacitor. As illustrated in figure 3, the interface 25 modulates an electric signal on the electrode 26; that electric field is transmitted to the skin by contact. The personal authentication device 4 can detect the modulated signal by retrieving it on a second electrode 41 in permanent contact with the skin of the user. The interface 25 comprises at its output an amplifier A_{E} designed to supply an electric field on the electrode 26. The electrode 41 is connected to the input of an amplifier A_{R} located in the authentication device. The electrodes 26 and 41 are connected to each other by the connecting capacitance C_{b} corresponding to the equivalent capacitance of the human body in contact with the electrodes 26 and 41. Besides, these two electrodes are also connected to the ground by parasite capacitances Cₚ₁ and Cₚ₂. The signal is thus transmitted by means of a capacitive bridge made up of capacitances C_{b}, Cₚ₁ and Cₚ₂. In order to avoid parasite saturation of the amplifier A_{R}, the bandwidth must be limited to the frequency band used to transmit the modulated signal.

To return to figure 2, a microcontroller 27 acts as the processing and memory unit for the translation device 2. The microcontroller 27 is coupled with the interfaces 22, 23 and 25 in order to control them and carry out the appropriate data transfers. Further, the translation device is designed to be made integral with the control device 1. The microcontroller thus has a dedicated program that firstly identifies the service proposed by the control device 1 for the personal authentication device 4 and secondly emulates a contactless device that is authenticated by the control device. For security, the translation device 2 must be made integral with the control device 1.

In a first embodiment, the translation device 2 is placed inside the housing of the control device 1. The antenna 21 must thus be made to coincide with the antenna of the control device 1 in order to provide maximum coupling. The conductor 26 must be connected to a conductive plate accessible to the user 3. The frame of the control device 1 can act as the plate connected to the conductor 26.

In a second embodiment, the translation device 2 is placed above the control device 1 at its antenna to couple that antenna with the antenna 21. The translation device must be fixed so that it is very difficult to dismantle, for example by locking it by means of a lock. The conductor 26 may be connected to a plate located immediately next to the antenna 21.

For the working of the translation device 2, please refer to figure 4. The dotted line 5 represents the whole formed by the control device 1 with the translation device 2. The user 3 of a personal authentication device 4 will touch the conductor 26, thus triggering first communication 51 through their body. That first transfer communication 51 from the translation device to the personal device 4 of connection information, for example the connection parameters to use for the radiofrequency interface 23 and possibly a public key designed to send encrypted information.

When connection parameters are received, the microcontroller 27 sets up the radiofrequency interface 23 and sends a message 52 via the interface 23, for example containing the public key of the personal device 4 to open a secure channel with the translation device 2. Once the secure channel is open, mutual authentication 53 is carried out to identify the corresponding service to the translation device. Then, if the personal device 4 identifies that it is a service for which it contains identification data, then the personal device sends a message 54, also through the secure channel, containing the information relating to the user which is specific to the service associated with the control device 1.

The data for authentication with the device 1 being received, the translation device can then send a message 55 to the control device via the interface 22. That is followed by a transaction 56 aimed at emulating a contactless device that interacts with the control device by using the authentication information transmitted earlier by the personal device. Once the transaction 56 is complete, the translation device can then erase the information that has just been used.

As an alternative, the data transferred to the translation device 2 may be erased systematically after a certain time, for example a second.

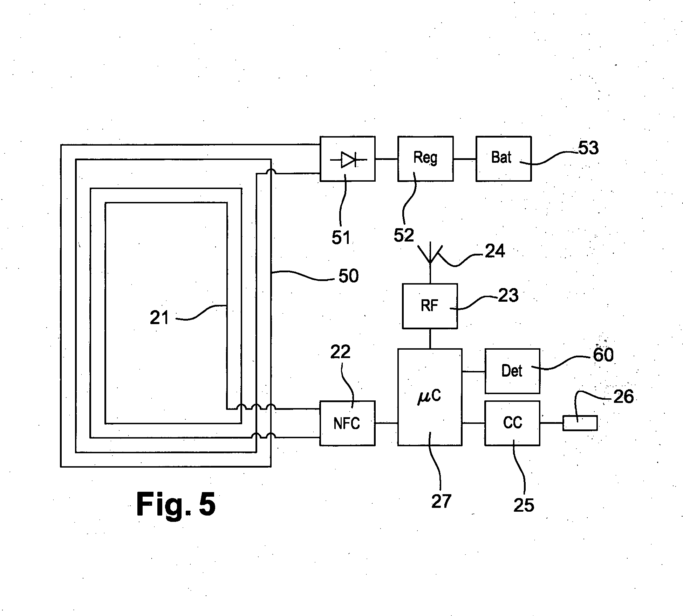

By reference to figure 5, two other alternatives will be detailed below. Each of the alternatives may be used independently of each other even though they are described in the same drawing and there is a synergy effect when they are used simultaneously. These two alternatives are aimed at regulating and reducing the retrieval of energy from the field of the control device 1.

In order to spread the catching of energy from the field of the control device 1 over time and reduce disturbance during information modulation, it is proposed here to use an auxiliary power circuit that is independent of NFC communication. The auxiliary power circuit comprises an additional antenna 50 connected to a rectifier bridge 51 followed by a regulator 52 that makes it possible to recharge a battery 53 that acts as the power source for the translation device 2. The additional antenna 50 makes it possible to catch the field independently of the first antenna 21, which reduces the disturbances on the first antenna and also reloads the battery 53 without necessarily powering the microcontroller 27 and the interfaces 22, 23 and 25. That makes it possible to also catch more power, whole spreading the time for reloading the battery 53.

ISO14443 readers have low radiation properties when no device is detected in the field, so the battery is recharged in the periods when the reader of the control device is required to operate. Further, it is also possible to deceive the reader if the battery is to be recharged faster.

In order to better control the putting into standby and waking of the microcontroller 27, it is preferable to use a presence detector 60 distinct from the interface 25, with very low power requirements. A simple presence detector 60 can consume energy only in case of detection, and it makes it possible to shut off the power supply to all the interfaces 22, 23 and 25. Thus, at the end of a transaction, the microcontroller 27 can shut off the power supply to all its interfaces with the exception of the presence detector 60 and lastly shut down its clock. If the presence detector detects a presence, an interrupt signal is sent to the microcontroller which restarts its clock and can then repower its interfaces.

The battery recharge circuit is of course independent of the standby function. On the other hand, the standby function makes it possible to recharge the battery 53 more efficiently.

## Claims

1. A communication translation device comprising:
- a first communication interface of capacitive coupling type (25), which makes it possible to carry out first communication to exchange confidential information with a user device (4);
- a second communication interface of radiofrequency type (23), which makes it possible to set up an encrypted radiofrequency type link with the user device using the confidential information; said translation device **characterised by**:
- a processing and memory unit (27), which makes it possible to receive, via the second communication interface, the authentication information contained in the user device and intended for an access control device (1).
- a third communication interface of contactless type (22) compliant with IS014443 using an electromagnetic field supplied by a contactless reader of the control device to communicate the authentication information that was received earlier from the user device.

2. A device according to claim 1, wherein the processing and memory unit systematically erases the authentication information after it is transmitted via the third communication interface.

3. A device according to claim 1, the said device being integrated into a control device including a contactless reader.

4. A device according to claim 1, wherein the first communication interface establishes communication using the human body as the conductor.

5. A device according to claim 1, wherein the second communication interface is a short-range radiofrequency type interface using wide band modulation.

6. A device according to claim 1, wherein the device comprises a power circuit that makes it possible to retrieve energy from the electromagnetic field in order to recharge a battery that is used to power the first to the third communication interfaces and the processing and memory unit.

7. An authentication method between a user device (4) using first capacitive coupling communication to start encrypted radiofrequency communication and an access control device (1) of the contactless type, said access control device (1) using a modulated electromagnetic field compliant with ISO14443, wherein a translation device (2) is used, comprising a first communication interface (25) of the capacitive coupling type, a second communication interface (23) of the radiofrequency type, a third communication interface (22) of the contactless type which is compliant with ISO14443 using the electromagnetic field supplied by the access control device, and a processing and memory unit, the method comprises the following steps:
- establishment of first communication (51) to exchange confidential information between the user device and the translation device using the first communication interface;
- establishment of a link of the encrypted radiofrequency type (52, 53) between the user device and the translation device using the confidential information using the second communication interface;
- transfer (54) to the translation device an via the second interface of an authentication information contained in the user device and intended for the access control device;
- at the end of the transfer of said authentication information to the translation device, establishment of contactless communication (55) between the translation device and the control device and execution of a session (56) through the third communication interface using the authentication information that was received earlier from the user device.

8. A method according to claim 7, wherein the processing and memory unit of the translation device erases all the information after it is transferred to the access control device.

9. A method according to claim 7, wherein the translation device retrieves part of the energy of the electromagnetic field supplied by the access control device to power itself.

## Patentansprüche

1. Gerät zur Kommunikationsübersetzung (2), das folgendes umfasst:
- eine erste Kommunikationsschnittstelle vom Typ der kapazitiven Kopplung (25), die eine erste Kommunikation ermöglicht, um vertrauliche Informationen mit einem Benutzergerät (4) auszutauschen;
- eine zweite Kommunikationsschnittstelle vom Hochfrequenz-Typ (23), die die Herstellung einer verschlüsselten Hochfrequenzverbindung mit dem Benutzergerät ermöglicht und dafür die vertraulichen Informationen nutzt, wobei das besagte Übersetzungsgerät durch folgende Elemente gekennzeichnet ist:
- eine Prozessor- und Speichereinheit (27), mit der über die zweite Kommunikationsschnittstelle die im Benutzergerät enthaltenen Authentifizierungsdaten empfangen werden können, welche für ein Zugangskontrollgerät (1) bestimmt sind;
- ein dritte Kommunikationsschnittstelle vom kontaktlosen Typ (22), die die ISO-Norm 14443 erfüllt und ein elektromagnetisches Feld benutzt, welches vom kontaktlosen Leser des Kontrollgeräts bereitgestellt wird, um die Authentifizierungsdaten weiterzugeben, die zuvor vom Benutzergerät empfangen wurden.

2. Gerät nach Anspruch 1, wobei die Prozessor- und Speichereinheit systematisch die Authentifizierungsdaten löscht, nachdem sie über die dritte Kommunikationsschnittstelle übertragen wurden.

3. Gerät nach Anspruch 1, wobei das besagte Gerät in ein Kontrollgerät integriert ist, das einen kontaktlosen Leser enthält.

4. Gerät nach Anspruch 1, wobei die erste Kommunikationsschnittstelle eine Kommunikation herstellt, bei der sie den menschlichen Körper als Leiter nutzt.

5. Gerät nach Anspruch 1, wobei die zweite Kommunikationsschnittstelle eine Hochfrequenzschnittstelle mit kurzer Reichweite ist, die die Breitbandmodulation nutzt.

6. Gerät nach Anspruch 1, wobei das Gerät einen Stromkreis umfasst, der es ermöglicht, Energie aus dem elektromagnetischen Feld zu gewinnen, um einen Akku aufzuladen, der für die Stromversorgung der ersten bis dritten Kommunikationsschnittstellen und der Prozessor- und Speichereinheit eingesetzt wird.

7. Ein Authentifizierungsverfahren zwischen einem Benutzergerät (4), das zuerst eine kapazitive Kopplungskommunikation verwendet, um die verschlüsselte Hochfrequenzkommunikation zu starten, sowie ein kontaktloses Zugangskontrollgerät (1), wobei das besagte kontaktlose Zugangskontrollgerät (1) ein moduliertes elektromagnetisches Feld verwendet, das die ISO-Norm 14443 erfüllt, wozu ein Übersetzungsgerät (2) genutzt wird, das eine erste Kommunikationsschnittstelle (25) vom Typ der kapazitiven Kopplung, eine zweite Kommunikationsschnittstelle (23) vom Hochfrequenz-Typ, eine dritte kontaktlose Kommunikationsschnittstelle (22), welche die ISO-Norm 14443 erfüllt und das vom Zugangskontrollgerät bereitgestellte elektromagnetische Feld nutzt, und eine Prozessor- und Speichereinheit umfasst; das Verfahren umfasst die folgenden Schritte:
- Herstellung einer ersten Kommunikation (51) zum Austausch von vertraulichen Informationen zwischen dem Benutzergerät und dem Übersetzungsgerät, wozu die erste Kommunikationsschnittstelle verwendet wird;
- Herstellung eines verschlüsselten Hochfrequenz-Verbindung (52, 53) zwischen dem Benutzergerät und dem Übersetzungsgerät, wozu die vertraulichen Informationen genutzt werden und die zweite Kommunikationsschnittstelle verwendet wird;
- Übertragung (54) von Authentifizierungsdaten, die im Benutzergerät enthalten und für das Zugangskontrollgerät bestimmt sind, über die zweite Schnittstelle auf das Übersetzungsgerät;
- am Ende der Übertragung der besagten Authentifizierungsdaten auf das Übersetzungsgerät Herstellung einer kontaktlosen Kommunikation (55) zwischen dem Übersetzungsgerät und dem Kontrollgerät und Durchführung einer Sitzung (56) durch eine dritte Kommunikationsschnittstelle, wozu die Authentifizierungsdaten verwendet werden, die zuvor vom Benutzergerät empfangen wurden,

8. Verfahren nach Anspruch 7, wobei die Prozessor- und Speichereinheit alle Daten löscht, nachdem sie auf das Zugangskontrollgerät übertragen wurden.

9. Verfahren nach Anspruch 7, wobei das Übersetzungsgerät einen Teil der Energie aus dem elektromagnetischen Feld gewinnen kann, das vom Zugangskontrollgerät selbst bereitgestellt wird.

## Revendications

1. Dispositif de transformation de communication (2) comprenant :
- une première interface de communication de type à couplage capacitif (25), qui permet d'effectuer une première communication pour échanger des informations confidentielles avec un dispositif d'utilisateur (4) ;
- une deuxième interface de communication de type radiofréquence (23), qui permet de configurer une liaison de type radiofréquence chiffrée avec le dispositif d'utilisateur en utilisant les informations confidentielles ; ledit dispositif de transformation étant **caractérisé par** :
- une unité de traitement et de mémorisation (27), qui permet de recevoir, par l'intermédiaire de la deuxième interface de communication, des informations d'authentification contenues dans le dispositif d'utilisateur et destinées à un dispositif de contrôle d'accès (1) ;
- une troisième interface de communication de type sans contact (22) conforme à la norme IS014443 utilisant un champ électromagnétique délivré par un lecteur sans contact du dispositif de contrôle pour communiquer les informations d'authentification qui ont été reçues précédemment du dispositif d'utilisateur.

2. Dispositif selon la revendication 1, dans lequel l'unité de traitement et de mémorisation efface systématiquement les informations d'authentification après qu'elles ont été transmises par l'intermédiaire de la troisième interface de communication.

3. Dispositif selon la revendication 1, ledit dispositif étant intégré dans un dispositif de contrôle comprenant un lecteur sans contact.

4. Dispositif selon la revendication 1, dans lequel la première interface de communication établit une communication en utilisant le corps humain en tant que conducteur.

5. Dispositif selon la revendication 1, dans lequel la deuxième interface de communication est une interface de type radiofréquence à courte portée utilisant une modulation large bande.

6. Dispositif selon la revendication 1, dans lequel le dispositif comprend un circuit de puissance qui permet de récupérer l'énergie du champ électromagnétique afin de recharger une batterie qui est utilisée pour alimenter les première à troisième interfaces de communication et l'unité de traitement et de mémorisation.

7. Procédé d'authentification entre un dispositif d'utilisateur (4) utilisant une première communication à couplage capacitif pour débuter une communication radiofréquence chiffrée et un dispositif de contrôle d'accès (1) du type sans contact, ledit dispositif de contrôle d'accès du type sans contact (1) utilisant un champ électromagnétique modulé conforme à la norme IS014443, dans lequel un dispositif de transformation (2) est utilisé, comprenant une première interface de communication (25) du type à couplage capacitif, une deuxième interface de communication (23) du type radiofréquence, une troisième interface de communication (22) du type sans contact qui est conforme à la norme IS014443 utilisant le champ électromagnétique délivré par le dispositif de contrôle d'accès, et une unité de traitement et de mémorisation, le procédé comprend les étapes suivantes :
- l'établissement d'une première communication (51) pour échanger des informations confidentielles entre le dispositif d'utilisateur et le dispositif de transformation en utilisant la première interface de communication ;
- l'établissement d'une liaison du type radiofréquence chiffrée (52, 53) entre le dispositif d'utilisateur et le dispositif de transformation utilisant les informations confidentielles en utilisant la deuxième interface de communication ;
- le transfert (54) au dispositif de transformation, par l'intermédiaire de la deuxième interface, des informations d'authentification contenues dans le dispositif d'utilisateur et destinées au dispositif de contrôle d'accès ;
- à la fin du transfert desdites informations d'authentification au dispositif de transformation, l'établissement d'une communication sans contact (55) entre le dispositif de transformation et le dispositif de contrôle et l'exécution d'une session (56) par l'intermédiaire de la troisième interface de communication en utilisant les informations d'authentification qui ont été reçues précédemment du dispositif d'utilisateur.

8. Procédé selon la revendication 7, dans lequel l'unité de traitement et de mémorisation du dispositif de transformation efface toutes les informations après qu'elles ont été transférées au dispositif de contrôle d'accès.

9. Procédé selon la revendication 7, dans lequel le dispositif de transformation récupère une partie de l'énergie du champ électromagnétique délivré par le dispositif de contrôle d'accès pour s'alimenter.
